(19) Europäisches Patentamt
European Patent Office
Office européen des brevets

(11) Publication number: **0 018 094**
**B1**

# (12) EUROPEAN PATENT SPECIFICATION

(45) Date of publication of patent specification: **02.06.82**

(51) Int. Cl.³: **C 07 F 7/18**

(21) Application number: **80300886.1**

(22) Date of filing: **21.03.80**

## (54) Trialkoxysilylthiopropionamides.

(30) Priority: **30.03.79 US 25658**

(43) Date of publication of application:
**29.10.80 Bulletin 80/22**

(45) Publication of the grant of the patent:
**02.06.82 Bulletin 82/22**

(84) Designated Contracting States:
**BE DE FR GB IT NL**

(56) References cited:
**DE - C - 1 117 579**
**US - A - 4 012 403**

**ANGEWANDTE CHEMIE, Vol. 87, No. 11, June 1975 Weinheim W. WALTER et al. "1,3-S,N-Silylwanderung bei silylierten Thioamiden" pages 420 to 421**

(73) Proprietor: **UNION CARBIDE CORPORATION**
**Old Ridgebury Road**
**Danbury Connecticut 06817 (US)**

(72) Inventor: **Petty, Herbert Euell**
**7 Winthrop Road**
**Bethel Connecticut (US)**

(74) Representative: **Baverstock, Michael George Douglas et al,**
**BOULT, WADE & TENNANT 27 Furnival Street**
**London, EC4A 1PQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Trialkoxysilylthiopropionamides

This invention relates to trialkoxysilylthiopropionamides useful for making mercaptopropylalkoxysilanes.

Mercapto-substituted silicon compounds are known in the art. They had been made primarily by two processes. One involves the addition of hydrogen sulphide to an ethylenically-unsaturated radical bonded directly to silicon. This is illustrated by the reaction of a large excess (e.g. greater than 400%) of hydrogen sulphide with a vinyl-substituted silane. The other common method for manufacturing mercapto-substituted silicone compounds involves the reaction of an alkali metal mercaptide with a chloroalkyl silicon compound, which results in the formation of sodium chloride by-product.

Recently, United States Patent No. 4,012,403 disclosed a synthesis of mercapto-substituted silicon compounds which avoids the necessity of using such a large excess of hydrogen sulphide and which does not result in the formation of a corrosive by-product such as sodium chloride. The synthesis described in that patent is based upon the development of a method for reducing beta-cyanoethyltrialkoxysilane by reaction with sulphur. It was found that, by reacting one mole of beta-cyanoethyltrialkoxysilane at high pressure and elevated temperatures with at least three moles of hydrogen and at least one mole of sulphur in the presence of a transition metal polysulphide catalyst, one could obtain high yields of the corresponding mercaptopropyltrialkoxysilane.

It has now been found that beta-cyanoethyltrialkoxysilane can be advantageously converted to the corresponding mercaptopropyltrialkoxysilane via a beta-trialkoxysilylthiopropionamide in a two stage process. The advantages of the two stage process, relative to the one stage process of United States Patent No. 4,012,403, include: (1) greater control of the stoichiometry of the gases consumed (*i.e.* one gas is consumed per stage) and (2) an increase in production yields in a reactor of a given pressure rating due to lower total pressure per mole of reactants.

The present invention, then, is derived from a process for producing gamma-mercaptopropytrialkoxysilane which comprises first, reacting a beta-cyanoethyltrialkoxysilane with hydrogen sulphide in the presence of an amine to form a beta-trialkoxysilylthiopropionamide intermediate, and second, reducing the beta-trialkoxysilylthiopropionamide with hydrogen in the presence of a transition metal polysulphide to yield the gamma-mercaptopropyltrialkoxysilane.

In accordance with the present invention there is provided a compound of the general formula:—

$$(RO)_3SiCH_2CH_2\overset{\overset{S}{\|}}{C}NH_2$$

wherein R is an alkyl group.

In the first step of the two stage process described above, a beta-cyanoethyltrialkoxysilane is converted with hydrogen sulphide in the presence of an amine to the corresponding beta-(thiocarbamoyl) ethyltrialkoxysilane. The preparation of thioamides based on the alkali-catalyzed reaction of nitriles with hydrogen sulphide or thiols is well-established in the literature. However, the yield of thioamide is greatly influenced by the nature of the starting nitrile. Aromatic nitriles generally react rapidly in the presence of a base, forming excellent yields of the corresponding thioamide. Aliphatic nitriles usually add hydrogen sulphide with greater difficulty. The amine-catalyzed condensation of hydrogen sulphide with silicon-containing aliphatic nitriles was found to be a facile method of preparation of the intermediates of the present invention having the general formula:—

$$(RO)_3SiCH_2CH_2\overset{\overset{S}{\|}}{C}NH_2$$

where R is an alkyl, and preferably a $C_1$ to $C_4$ alkyl, group. A particularly preferred group R is an ethyl group.

In converting beta-cyanoethyltrialkoxy-silane to beta-(thiocarbamoyl)-ethyltrialkoxysilane, the beta-cyanoethyltrialkoxysilane, *e.g.* $(C_2H_5O)_3SiCH_2CH_2CN$, is reacted with the hydrogen sulphide in the presence of an amine catalyst, *e.g.* a secondary amine such as diethylamine. An aprotic reaction solvent in which hydrogen sulphide is soluble, such as dimethylformamide, may be utilized. The solvent is necessary only in low pressure reactions to maintain a sufficient concentration of hydrogen sulphide for an appreciable reaction rate. However, a solvent is not necessary in a closed system, allowing simply the stoichiometric quantity of hydrogen sulphide to be added initially. The quantity of hydrogen sulphide consumed by the reaction can readily be monitored by the decrease in the presence of the closed system; this provides a simple measure of reaction completion. The preferred reaction temperature is 50—65°C. At temperatures exceeding 100°C, a reverse reaction takes precedence in the presence of the amine catalyst: i.e., the silicon-containing thioamide liberates hydrogen sulphide and re-forms the starting nitrile.

In the second stage of the two stage process the beta-(thiocarbamoyl)ethyltrialkoxysilane is reacted with hydrogen in the presence of a transition metal polysulphide catalyst to form a gamma-mercaptopropyltrialkoxysilane.

It is known that thioamide groups can be reduced with such conventional reducing agents as zinc in acid solution, lithium hydride, or lithium aluminium hydride. (True catalytic processes under hydrogen pressure have not been reported, due, probably, to poisoning of the catalyst by the sulphur function). However, such reductions of thioamide groups result in the formation of an amine. In contrast, it has now been found that transition metal polysulphides, such as those developed for the reductive thiolation process of U.S. Patent No. 4,012,403 (not being subject to such poisoning), may be utilized to reduce thioamide groups not to amines but to mercaptans.

Thus, gamma-mercaptopropyltrialkoxysilanes can be prèpared by reacting a beta-(thiocarbamoyl)ethyltrialkoxysilane with hydrogen, in a pressure reactor, at a temperature between about 100°C and about 300°C, in the ratio of at least 2 moles of hydrogen for each mole of the silane, and in the presence of about 0.01 to about 10 weight percent, based on the weight of the silane and hydrogen, of a transition metal polysulphide. A preferred embodiment of this process step comprises reacting beta-(thiocarbamoyl)ethyltrialkoxysilane with at least two moles of hydrogen, in a pressure reactor wherein there is present about 2.5 weight percent of cobalt trisulphide catalyst at a temperature of about 200°C.

The working examples which follow are presented to illustrate the practice of the present invention. They are not intended to be, and should not be construed as, limiting the scope of the invention.

Example 1

Preparation of beta-triethoxysilylthiopropionamide

Laboratory scale

Into a clean, dry 300 milliliter high pressure reaction vessel were added 200 grams (0.92 moles) of beta-cyanoethyltriethoxysilane and 10 grams of diethylamine. The reactor was cooled to the temperature of solid carbon dioxide, and 42.0 grams (1.3 moles) of hydrogen sulphide were added via a calibrated metering system. The reactor was placed in a rocker and with agitation was heated to 60°C for 5 hours. The pressure of the system increased to a maximum of 10.7 bars (140 psig) and decreased to 5.8 bars (70 psig) when the reaction was terminated. The final pressure at ambient temperature was 3.1 bars (30 psig). The yield of crude beta-triethoxysilylthiopropionamide product was 258.4 grams. Analysis of the product mixture indicated 19 mg/g or 16% unreacted beta-cyanoethyltriethoxysilane.

Example 2

Preparation of beta-triethoxysilylthiopropionamide

Pilot plant scale

Utilizing a 57 litre (15 gallon) high pressure stainless steel system, 36.3 Kg (80 pounds) of beta-cyanoethyltriethoxysilane and 3.62 Kg (8 pounds) of diethylamine were added initially. With a diptude, 5.44 Kg (12 pounds) of hydrogen sulphide were charged into the reactor while cooling was maintained. The reactor was then heated to 60°C with stirring for 6 hours. The residual hydrogen sulphide (6.5 bars, 80 psig) was carefully vented into a caustic scrubber and the product thioamide (42.63 Kg, 94 pounds) was collected. The product, analyzed by InfraRed Spectroscopy, contained 5% unreacted nitrile.

Example 3

Preparation of beta-triethoxysilylthiopropionamide in dimethylformamide

Into a four necked 500 milliliter flask equipped with a mechanical agitator, thermometer, thermostatted heating mantel, hydrogen sulphide inlet tube with calibrator flowmeter, and condenser were added 250 milliliters of a solution prepared by diluting 108.5 grams of beta-cyanoethyltriethoxysilane and 10.9 grams of diethylamine to 500 milliliters (351.8 grams) with dimethylformamide (equivalent to 1.0 molar solution of beta-cyanoethyltriethoxysilane). The solution was heated to 65°C and maintained at 65°C during the course of reaction. Hydrogen sulphide was added at a rate of 0.25 g/minute during the course of the experiment. Samples taken periodically, measuring consumption of nitrile by InfraRed Spectroscopy (IR) as a measure of the extent of reaction, are summarized below.

| Time (minutes) | Temperature °C | Result (quantative IR determination |
|---|---|---|
| 0 | 65 | 0.96 moles CN/liter |
| 15 | 65 | 0.86 moles CN/liter |
| 30 | 65 | 0.73 moles CN/liter |
| 45 | 65 | 0.73 moles CN/liter |
| 60 | 65 | 0.69 moles CN/liter |
| 90 | 65 | 0.60 moles CN/liter |
| 120 | 65 | 0.55 moles CN/liter |
| 150 | 65 | 0.45 moles CN/liter |
| 192 | 65 | 0.38 moles CN/liter |

Example 4

Preparation of gamma-mercaptopropyltriethoxysilane high pressure

Into a clean, dry 300 cubic centimeter high pressure reactor were added 58 grams (0.23 moles) of beta-triethoxysilylthiopropionamide product (containing 14% beta-cyanoethyltriethoxysilane starting material) and 2.5 weight percent of cobalt trisulphide. The reactor was sealed, pressurized to 76.9 bars (1100 psig) with hydrogen, and placed in a rocker. The vessel was heated to 200°C internal temperature and maintained at that temperature for 5 hours with agitation while the pressure increased to a maximum of 121.7 bars (1750 psig). The final pressure at elevated temperature was 104.4 bars (1500 psig) and at ambient temperature was 42.4 bars (600 psig) (indicating that hydrogen was consumed by the reaction). This procedure yielded 59% of the desired gamma-mercaptopropyltriethoxysilane.

Example 5

Preparation of gamma-mercaptopropyltriethoxysilane

Continuous hydrogen feed

Into a clean, dry 300 cubic centimeter high pressure reactor were added 150 grams (0.60 moles) of beta-triethoxysilylthiopropionamide product (Example 2 pilot plant lot containing 5% beta-cyanoethyltriethoxysilane starting material) and 2.5 weight percent of cobalt trisulphide. The reactor was sealed, initially pressurized to 42.4 bars (600 psig) with hydrogen and placed in a rocker. The vessel was heated to 195°C internal temperature which raised the hydrogen pressure to 76.9 bars (1100 psig). Heating was maintained for 8 hours with agitation. Hydrogen was continuously fed into the reactor to maintain the hydrogen pressure at about 70.0 bars (1000 psig). The pressure never exceeded 76.9 bars (1100 psig). The pressure at the end of the reaction was 40.7 bars (575 psig). The reaction produced the desired gamma-mercaptopropyltriethoxysilane.

Example 6

Preparation of gamma-mercaptopropyltriethoxysilane

Rhenium sulphide catalyst

Into a clean, dry 300 cubic centimeter high pressure reactor were added 58 grams (0.23 moles) of beta-triethoxysilylthiopropionamide product (Example 2 pilot plant lot containing 5% beta-cyanoethyltriethoxysilane starting material), 1.45 grams (2.5 weight percent) of rhenium heptasulphide catalyst ($Re_2S_7 . 2H_2O$), and 12 grams ethanol rinse. The reactor was sealed, initially pressurized to 56.2 bars (800 psig) with hydrogen, and placed in a rocker. The vessel was heated with agitation for 4 hours to a maximum pressure of 70.0 bars (1000 psig). After cooling to ambient temperature, the pressure was 1.01 bars (0 psig), indicating that hydrogen was consumed by the reaction. The reaction had produced gamma-mercaptopropyltriethoxysilane.

**Claims**

1. A compound of the general formula:—

$$(RO)_3SiCH_2CH_2\overset{\overset{S}{\|}}{C}NH_2$$

wherein R is an alkyl group.

2. A compound as claimed in claim 1 wherein R is an ethyl group.

**Revendications**

1. Un composé de formule générale:

$$(RO)_3SiCH_2CH_2\overset{\overset{S}{\|}}{C}NH_2$$

dans laquelle R est un groupe alkyle.

2. Composé suivant la revendication 1, dans lequel R est un groupe éthyle.

**Patentansprüche**

1. Verbindungen der allgemeinen Formel:

$$(RO)_3SiCH_2CH_2\overset{\overset{S}{\|}}{C}NH_2$$

worin R eine Alkylgruppe ist.

2. Verbindung nach Anspruch 1, dadurch gekennzeichnet, daß R eine Äthylgruppe ist.